# FASCICULE DE BREVET EUROPEEN

(11) **EP 0 773 384 B1**
(45) Date de publication et mention de la délivrance du brevet: **19.12.2001**
(21) Numéro de dépôt: 96402338.6
(22) Date de dépôt: 04.11.1996
(51) Int. Cl.: F16D 23/14, F16C 33/80

(54) **Flasque de protection pour roulement, roulement associé et procédé de fabrication d'une bague de roulement équipée d'un flasque de protection**
Schutzflansch für Rollenlager, damit ausgerüstetes Lager und Herstellungsverfahren für einen Lagerring, der mit einem Schutzflansch versehen ist
Protection flange for roller bearing, bearing equipped with it, and manufacturing method of a race ring equipped with a protection flange

(30) Priorité: 09.11.1995 FR 9513277
(43) Date de publication de la demande: 14.05.1997
(73) Titulaire: SKF FRANCE, F-92142 Clamart Cédex (FR)
(72) Inventeur: Coquelin, Jean Philippe, 37100 Tours (FR); Poulle, Thierry, 37370 Neuvy-le-Roi (FR); Ponson, Frédéric, 37230 Luynes (FR)
(74) Mandataire: Casalonga, Axel

(56) Documents cités:
- FR-A- 2 250 043
- FR-A- 2 559 861
- FR-A- 2 607 885

## Description

La présente invention concerne les flasques de protection montés à l'intérieur d'un roulement et destinés d'une part à retenir la graisse à l'intérieur du roulement, à proximité des éléments roulants et d'autre part à protéger le roulement contre les pollutions indésirables en provenance du milieu extérieur.

L'invention s'applique plus particulièrement aux roulements de butées d'embrayage dont les bagues sont fabriquées sans enlèvement de copeaux, par découpe et emboutissage.

L'invention peut également s'appliquer dans des roulements de butée de suspension de type McPHERSON.

Des roulements de butée d'embrayage munis de flasques de protection interne assurant l'étanchéité d'un côté du roulement sont connus par le document FR-A-2 607 885. Ces flasques se présentent sous la forme de capots emboutis solidarisés à l'une des bagues du roulement et viennent se monter par sertissage dans une rainure interne de la bague ce qui assure à la fois la solidarisation axiale et radiale des deux pièces. Ces capots en tôle comprennent un rebord d'accrochage sans discontinuité de matière coopérant avec une rainure interne. Ce type de capot rigide requiert l'utilisation de rainures présentant des tolérances de fabrication assez réduites réalisées par reprise, par exemple tournage ou rectification, sur la bague emboutie. Cette opération de reprise représente un coût de fabrication supplémentaire.

On connaît également par le document FR-A-2 559 861 des flasques sous forme de capots emboutis emmanchés à force par l'intermédiaire d'une portée cylindrique montée serrée sur une portée correspondante de la bague supportant le flasque. Un tel type de montage exige la présence d'une portée cylindrique sur la bague du roulement et une maîtrise relativement bonne des cotes diamètrales des portées d'emmanchement. Les dimensions axiales des portées cylindriques d'emmanchement ne peuvent descendre au-dessous d'un certain seuil pour que l'emmanchement soit efficace, ce qui influe négativement sur les dimensions axiales globales du roulement.

La présente invention a pour objet de résoudre l'ensemble de ces problèmes en proposant des flasques permettant de s'accommoder de rainures présentant des tolérances de fabrication plus grandes que des rainures usinées par tournage ou par rectification. Les roulements équipés de flasques réalisés suivant l'invention peuvent, en particulier, être pourvus de rainures d'accrochage réalisées par emboutissage à plat ce qui est une solution particulièrement économique.

La présente invention a également pour objet un procédé de fabrication d'une bague de roulement équipée d'un flasque de protection, particulièrement économique et permettant l'utilisation d'un roulement compact, le flasque ne nécessitant pas de portée cylindrique de montage.

Le flasque *annulaire* de protection, selon la présente invention, est destiné à être monté sur l'une des bagues d'un roulement du type comprenant au moins une rangée d'éléments roulants maintenus entre *les* deux bagues de roulement. Le flasque annulaire comprend une partie de protection s'étendant à proximité de l'autre bague du roulement et une partie de fixation sur la bague du roulement *supportant le flasque annulaire.* La partie de fixation comprend une surface d'appui de révolution dont la génératrice fait un angle A par rapport à un plan radial, avant le montage du flasque, et une surface d'accrochage de forme tronconique, raccordée à la surface d'appui, découpée en une pluralité de languettes radialement élastiques et formant une couronne selon un angle B par rapport à un plan radial.

Le roulement selon l'invention comprend au moins une rangée d'éléments roulants maintenus entre deux bagues de roulement et un flasque de protection monté sur l'une des bagues et s'étendant à proximité de l'autre bague. La bague supportant le flasque comprend une surface sensiblement radiale d'appui pour le flasque et, à proximité axiale de celle-ci une surface de révolution pourvue d'une rainure annulaire destinée à maintenir le flasque par encliquetage.

Dans un mode de réalisation préféré de l'invention, le diamètre pris sur l'extrémité libre de languettes du flasque avant le montage du flasque, est sensiblement égal au diamètre du fond de la rainure de la bague supportant le flasque. De préférence, la rainure comprend une surface de retenue destinée à coopérer avec l'extrémité des languettes du flasque. La surface de retenue peut être prévue de façon à être sensiblement perpendiculaire aux languettes. Un joint d'étanchéité solidaire du flasque peut être prévu pour venir en contact avec l'autre bague.

Le procédé de fabrication d'une bague de roulement équipé d'un flasque de protection selon l'invention, comprend les étapes suivantes: on découpe un flan de tôle plane, on aménage par estampage une rainure circulaire dans la surface plane du flan, on emboutit le flan pour donner à la bague sa forme définitive et amener la rainure à sa position axiale souhaitée par rapport à la surface radiale d'appui pour le flasque, et on met en place le flasque annulaire. Le flasque annulaire comprend, en section, une première branche cylindrique servant de partie de protection, un fond incliné par rapport à un plan radial et une deuxième branche inclinée par rapport à un plan radial.

La mise en place, par encliquetage, du flasque est effectuée par enfoncement au moyen d'un outil de mise en place qui agit sur le fond du flasque et provoque le glissement de la seconde branche sur la surface de révolution de la bague puis le contact entre le fond et une surface radiale d'appui de la bague et enfin la mise en place de la seconde branche dans la rainure de la bague par élasticité. La seconde branche est découpée en une pluralité de languettes et le flasque, une fois mis en place, tend par élasticité à reprendre sa forme initiale et à venir s'arc-bouter axialement entre la surface d'appui de la bague et le fond de la rainure.

L'invention sera mieux comprise à l'étude de la description détaillée de quelques modes de réalisation pris à titre d'exemples nullement limitatifs et illustrés par les dessins annexés, sur lesquels :
la figure 1 est une vue en coupe diamètrale en élévation d'un roulement selon l'invention;
la figure 2 est une vue de face en élévation du flasque;
la figure 3 est une vue partielle en coupe du roulement lors de la fabrication;
la figure 4 semblable à la figure 3 illustre l'étape suivante de la fabrication;
la figure 5 est une vue développée du positionnement du flasque à l'intérieur du roulement;
la figure 6 est une vue en demi-coupe en élévation d'un autre mode de réalisation de l'invention; et
la figure 7 est une vue montrant une variante de la figure 1.

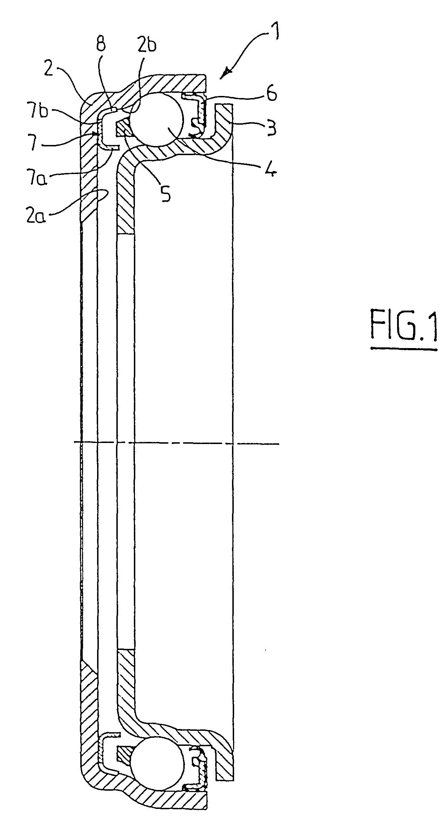

Tel qu'illustré sur la figure 1, le roulement 1 comprend une bague extérieure tournante 2, une bague intérieure non tournante 3, une rangée d'éléments roulants 4 sous forme de billes, une cage 5 de maintien des éléments roulants 4, une garniture d'étanchéité 6 solidaire de la bague tournante 2 et en contact de frottement avec la bague non tournante 3 et un flasque de protection 7 réalisé à partir d'un feuillard d'acier de faible épaisseur.

Le flasque de protection 7 est monté sur un des côtés du roulement 1, la garniture d'étanchéité 6 étant monté de l'autre côté, de façon que les éléments roulants 4 soient protégés sur leurs deux faces et que la graisse du roulement 1 reste dans l'espace défini par la bague tournante 2, la bague non tournante 3, la garniture d'étanchéité 6 et le flasque de protection 7. Le flasque de protection 7 est solidaire de la bague tournante 2, et comprend, en section, une première branche 7a cylindrique formant partie de protection, qui s'étend à proximité de la bague non tournante 3 roulement 1 de façon à former un passage étroit. Le flasque de protection 7 comprend également un fond 7b en contact avec la bague tournante 2.

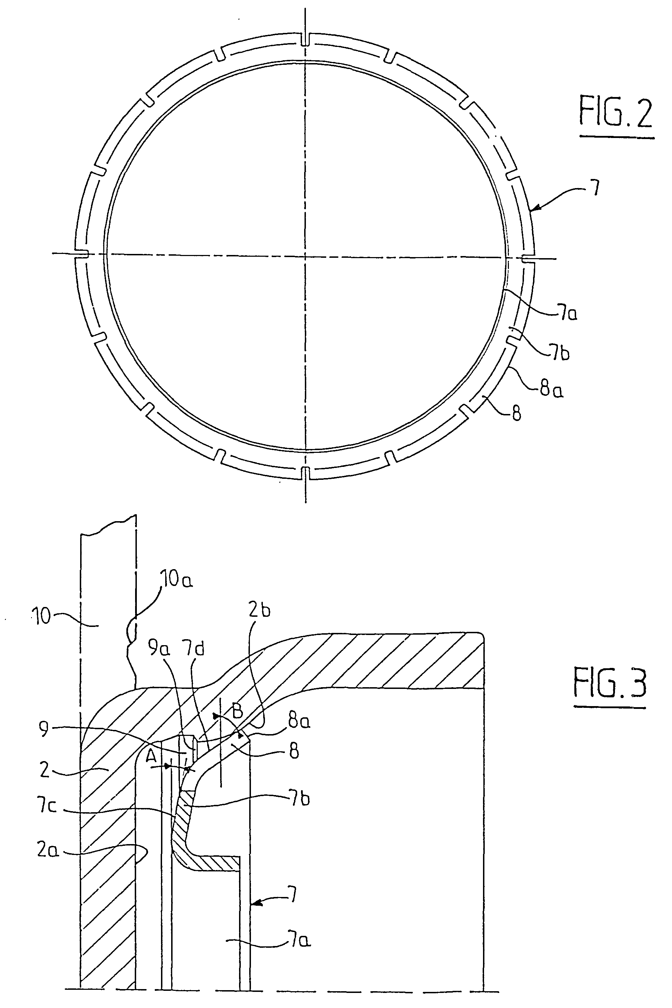

Comme illustré sur les figures 2 à 4, le fond 7b comprend une surface d'appui 7c de révolution partiellement en contact avec une surface radiale 2a de la bague tournante 2, et se prolonge par la seconde branche du flasque 7, inclinée et munie d'une surface d'accrochage 7d tronconique découpée à son extrémité libre par une rangée de languettes 8 radialement élastiques qui forment une couronne s'étendant radialement vers l'extérieur jusqu'à une surface d'extrémité 8a. La surface d'accrochage 7d et ses languettes 8 sont en contact avec une surface de révolution 2b de la bague tournante 2. Le fond 7b et la seconde branche du flasque 7 forment une partie de fixation du flasque 7 sur la bague 2.

La surface de révolution 2b de la bague tournante 2 est tronconique et pourvue d'une rainure 9 destinée à recevoir les languettes 8. Bien entendu, la surface de révolution 2b pourrait également être cylindrique.

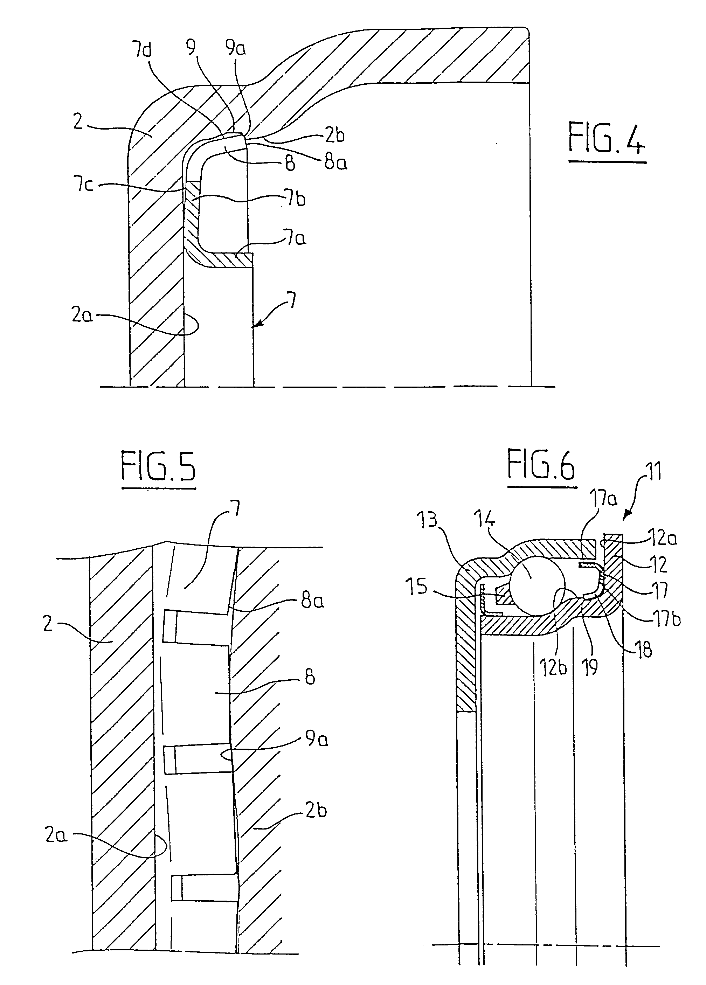

Sur la figure 3, le flasque est représenté au début de son montage dans la bague 2 c'est-à-dire à l'état non déformé. La première branche 7a du flasque 7 est sensiblement cylindrique et de même axe que la bague 2. Le fond 7b forme un angle A avec un plan radial du roulement 1. La deuxième branche du flasque 7 forme un angle B avec le même plan radial du roulement 1. On peut choisir un angle A de l'ordre de 5° à 20°, par exemple 15°, et un angle B de l'ordre de 40° à 80°, par exemple 60°.

La bague 2 du roulement 1 est fabriquée par découpe d'un flan de tôle plane 10, représenté en traits discontinus sur la figure 3, aménagement, de préférence sans enlèvement de copeaux, d'une rainure circulaire 10a, emboutissage de la plaque 10 de façon à former la bague 2 et à amener la rainure 10a sous la forme définitive 9 sur la surface de révolution 2b et à sa position axiale souhaitée par rapport à la surface radiale d'appui 2a de la bague 2.

Lors du montage (figures 3 et 4), le flasque 7 est introduit à l'intérieur de la bague tournante 2 puis est enfoncé axialement par un outil de mise en place non représenté, agissant sur le fond 7b ce qui provoque le glissement de la surface d'accrochage 7d par rapport à la surface de révolution 2b de la bague 2 et la déformation des languettes 8. A la fin de la mise en place (figure 4), la surface d'appui de révolution 7c du fond 7b vient partiellement au contact de la surface d'appui 2a de la bague tournante 2 tout en conservant par rapport à un plan radial, un angle résiduel de quelques degrés, et les languettes 8 viennent s'encliqueter dans la rainure 9 en reprenant leur forme initiale. Le flasque 7 par élasticité tend à reprendre sa forme initiale et vient donc s'arc-bouter, d'une part, contre la surface radiale d'appui 2a de la bague 2 et, d'autre part, par l'extrémité des languettes 8 contre le flanc de la rainure 9. Le flanc de la rainure 9 est embouti de façon à être sensiblement perpendiculaire avec les languettes 8 pour garantir un bon accrochage et former une surface de retenue 9a des languettes 8. La surface d'extrémité 8a des languettes 8 est ainsi parallèle à la surface de retenue 9a ce qui assure un contact de retenue satisfaisant sans déformation de l'une ou l'autre des surfaces.

Comme la rainure 9 est de préférence réalisée sans enlèvement de copeaux, les tolérances de fabrication sont relativement élevées. Sur la figure 5, les défauts géométriques de la rainure 9 ont été volontairement exagérés afin de montrer le maintien du flasque 7 dans la bague 2. On voit donc que le flasque 7 s'accommode de tolérances de fabrication importantes.

Dans le mode de réalisation décrit jusqu'ici, le flasque de protection est monté sur une bague extérieure tournante d'un roulement. Un tel flasque de protection peut également être monté sur une bague extérieure non tournante, une bague intérieure tournante ou une bague intérieure non tournante. Ce dernier mode de réalisation est illustré par la figure 6 sur laquelle les références des éléments semblables à ceux des figures précédentes ont été augmentées du nombre 10. Le roulement 11 comprend une bague extérieure 13 tournante et une bague intérieure 12 non tournante. Le flasque 17 est réalisé avec une première branche 17a servant de partie de protection, de plus grand diamètre que les languettes 18. Les languettes 18 s'étendent radialement vers l'intérieur et sont en contact avec une rainure 19 aménagée sur une surface extérieure de révolution 12b de la bague non tournante 12 et la première branche 17a servant de partie de protection s'étend à proximité de la bague extérieure tournante 13.

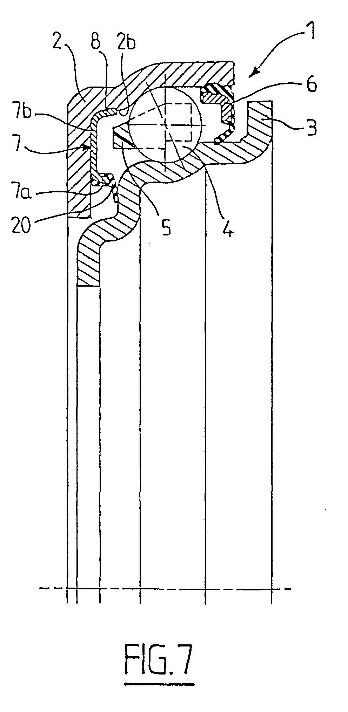

La variante illustrée sur la figure 7 est identique à celle de la figure 1, à ceci près qu'un joint d'étanchéité 20 est surmoulé sur l'extrémité libre de la première branche cylindrique 7a du flasque 7 et vient en contact frottant avec la bague non tournante 3 pour garantir une bonne étanchéité du roulement 1.

Grâce à l'invention, le flasque peut s'accommoder de tolérances de fabrication assez larges tant sur la rainure elle-même que sur la position axiale de la rainure par rapport à la face radiale d'appui de la bague qui la supporte. L'élasticité axiale et radiale du flasque permet de s'adapter aux défauts géométriques de la rainure et à son positionnement axial. Il va de soi que le flasque suivant l'invention peut parfaitement être utilisé avec des rainures usinées sur la bague formée avec enlèvement de copeaux par tournage ou rectification. Le roulement peut être relativement compact et le flasque monté à l'intérieur de celui-ci ne présente aucun risque de désolidarisation par rapport à la bague qui le supporte.

## Revendications

1. Flasque annulaire de protection (7) destiné à être monté sur l'une des bagues (2,3) d'un roulement (1) du type comprenant au moins une rangée d'éléments roulants (4) maintenus entre les deux bagues de roulement (2,3), le flasque annulaire (7) comprenant une partie de protection s'étendant à proximité de l'autre bague du roulement (1) et une partie de fixation sur la bague du roulement (1) supportant le flasque annulaire (7), **caracterisé en ce que** la partie de fixation comprend une surface d'appui (7c) de révolution dont la génératrice fait un angle A par rapport à un plan radial avant le montage du flasque (7), et une surface d'accrochage (7d), de forme tronconique, raccordée à la surface d'appui (7c), découpée en une pluralité de languettes (8) radialement élastiques et formant une couronne selon un angle B par rapport à un plan radial.

2. Flasque de protection (7) selon la revendication 1, **caractérisé en ce que** la valeur de l'angle A est comprise entre 5° et 20° et celle de l'angle B est comprise entre 40° et 80°.

3. Flasque de protection (7) selon la revendication 1 ou 2, **caractérisé en ce que** les languettes (8) s'étendent radialement vers l'extérieur.

4. Flasque de protection (17) selon la revendication 1 ou 2, **caractérisé en ce que** les languettes (18) s'étendent radialement vers l'intérieur.

5. Roulement (1) comprenant au moins une rangée d'éléments roulants (4) maintenus entre deux bagues de roulement et un flasque de protection (7) monté sur l'une des bagues (2) et s'étendant à proximité de l'autre bague (3) du roulement (1), **caractérisé par le fait que** la bague (2) supportant le flasque (7) comprend une surface sensiblement radiale (2a) d'appui pour le flasque et à proximité axiale de celle-ci une surface de révolution (2b) pourvue d'une rainure annulaire (9) destinée à maintenir le flasque (7) par encliquetage et pourvu d'une surface de retenue (9a) destinée à coopérer avec l'extrémité des languettes (8) du flasque (7).

6. Roulement selon la revendication 5, **caractérisé en ce que** le diamètre pris sur l'extrémité libre des languettes (8) du flasque (7), avant le montage du flasque, est sensiblement égal au diamètre du fond de la rainure (9).

7. Roulement selon la revendication 6, **caractérisé en ce que** le flasque (7) est maintenu élastiquement entre la surface radiale d'appui (2a) de la bague (2) et la surface de retenue (9a) de la rainure (9), les languettes (8) étant engagées dans ladite rainure (9).

8. Roulement selon l'une quelconque des revendications 5 à 7, **caractérisé en ce que** la surface de révolution (2b) est tronconique.

9. Roulement selon l'une quelconque des revendications 5 à 7, **caractérisé en ce que** la surface de révolution est cylindrique.

10. Roulement selon l'une quelconque des revendications 5 à 9, **caractérisé en ce que** le flasque (17) est supporté par la bague non tournante du roulement.

11. Roulement selon l'une quelconque des revendications 5 à 9, **caractérisé en ce que** le flasque (7) est supporté par la bague tournante du roulement.

12. Roulement selon l'une quelconque des revendications 5 à 11, **caractérisé en ce que** le flasque (17) est supporté par la bague extérieure du roulement.

13. Roulement selon l'une quelconque des revendications 5 à 11, **caractérisé en ce que** le flasque (7) est supporté par la bague intérieure du roulement.

14. Roulement selon l'une quelconque des revendications 5 à 13, **caractérisé par le fait qu'**il comprend un joint d'étanchéité (20) supporté par le flasque et venant en contact avec l'autre bague.

15. Procédé de fabrication d'une bague (2) de roulement (1) équipé d'un flasque de protection (7), **caractérisé par** les étapes suivantes :
- découpe d'un flan de tôle plane,
- aménagement par estampage d'une rainure circulaire dans la surface plane du flan,
- emboutissage du flan pour donner à la bague sa forme définitive et amener la rainure à sa position axiale souhaitée par rapport à la surface radiale d'appui pour le flasque,
- mise en place, par encliquetage, du flasque annulaire (7) comprenant, en section, une première branche cylindrique (7a) servant de partie de protection, un fond (7b) incliné par rapport à un plan radial du roulement et une deuxième branche inclinée par rapport à un plan radial du roulement, par enfoncement au moyen d'un outil de mise en place agissant sur le fond (7b) et provoquant le glissement de la seconde branche sur la surface de révolution (2b) de la bague (2) puis le contact entre le fond (7b) et une surface radiale d'appui (2a) de la bague (2) et enfin la mise en place de la seconde branche dans la rainure (9) de la bague (2), par élasticité, la seconde branché étant découpée en une pluralité de languettes (8), le flasque une fois mis en place tendant à reprendre sa forme initiale et venant s'arc-bouter axialement entre la surface d'appui (2a) de la bague non tournante (2) et le fond de la rainure (9).

## Patentansprüche

1. Ringförmiger Schutzflansch (7), der dazu vorgesehen ist an einem der Ringe (2,3) eines Lagers (1) befestigt zu werden, das wenigstens einer Reihe von Wälzkörpern (4) enthält, die zwischen den beiden Ringen (2,3) des Lagers angeordnet sind, wobei der Schutzflansch (7) einen Schutzabschnitt, der sich bis in die Nähe des anderen Rings des Lagers (1) erstreckt, und einen Abschnitt für die Befestigung an dem einen Ring des Lagers (1) aufweist, der den Schutzflansch (7) trägt, **dadurch gekennzeichnet, dass** der Befestigungsabschnitt eine rotationssymmetrische Stirnfläche (7c), deren Erzeugende vor dem Einbau des Flansches (7) in Bezug auf eine radiale Ebene einen Winkel A einschließt, und eine sich an die Stirnfläche (7c) anschließende Befestigungsfläche (7d) aufweist, die kegelstumpfförmig und in radialer Richtung in eine Vielzahl von Zungen (8) aufgeschnitten ist, die elastischen sind und unter einem Winkel B in Bezug auf eine radiale Ebene eine Krone bilden.

2. Schutzflansch (7) nach Anspruch 1, **dadurch gekennzeichnet, dass** der Winkel A zwischen 5° und 20° und der Winkel B zwischen 40° und 80° beträgt.

3. Schutzflansch (7) nach Anspruch 1 oder 2, **dadurch gekennzeichnet, dass** die Zungen (8) sich in radialer Richtung nach außen erstrecken.

4. Schutzflansch (17) nach Anspruch 1 oder 2, **dadurch gekennzeichnet, dass** die Zungen (18) sich in radialer Richtung nach innen erstrecken.

5. Lager (1) mit mindestens einer Reihe von Wälzkörpern (4), die zwischen zwei Ringen des Lagers angeordnet sind, und mit einem Schutzflansch (7), der an einem der Ringe befestigt ist und sich bis in die Nähe des anderen Rings (3) des Lagers (1) erstreckt, **dadurch gekennzeichnet, dass** der Ring (2), der den Schutzflansch (7) trägt, eine im Wesentlichen radiale Anlagefläche (2a) für den Schutzflansch aufweist und axial zu dieser benachbart mit einer rotationssymmetrischen Fläche (2b) versehen ist, die mit einer Ringnut (9) enthält, die dazu dient, dem Schutzflansch (7) durch Einrasten Halt zu geben, und hierfür mit einer Haltefläche (9a) ausgestattet ist, die mit den Enden der Zungen (8) des Schutzflansches (7) zusammenwirkt.

6. Lager nach Anspruch 5, **dadurch gekennzeichnet, dass** der gewählte Durchmesser, auf dem die freie Ende der Zungen (8) des Flansches (7) vor dem Einfügen der Schutzflansch liegen, im Wesentlichen mit dem Durchmesser des Bodens der Ringnut (9) übereinstimmt.

7. Lager nach Anspruch 6, **dadurch gekennzeichnet, dass** der Schutzflansch (7) elastisch zwischen der radialen Anlagefläche (2a) des Rings (2) und der Haltefläche (9a) der Ringnut (9) festgehalten wird, indem die Zungen (8) in die Ringnut (9) eingreifen.

8. Lager nach einem der Ansprüche 5 bis 7, **dadurch gekennzeichnet, dass** die rotationssymmetrische Fläche (2b) kegelstumpfförmig ist.

9. Lager nach einem der Ansprüche 5 bis 7, **dadurch gekennzeichnet, dass** die rotationssymmetrische Fläche zylindrisch ist.

10. Lager nach einem der Ansprüche 5 bis 9, **dadurch gekennzeichnet, dass** die Schutzflansch (17) von dem stillstehenden Ring des Lagers getragen wird.

11. Lager nach einem der Ansprüche 5 bis 9, **dadurch gekennzeichnet, dass** der Schutzflansch (7) von dem umlaufenden Ring des Lagers getragen wird.

12. Lager nach einem der Ansprüche 5 bis 11, **dadurch gekennzeichnet, dass** der Schutzflansch (17) von dem Außenring des Lagers getragen wird.

13. Lager nach einem der Ansprüche 5 bis 11, **dadurch gekennzeichnet, dass** der Schutzflansch (7) von dem Innenring des Lagers getragen wird.

14. Lager nach einem der Ansprüche 5 bis 13, **dadurch gekennzeichnet, dass** zu dem Lager eine Dichtungseinrichtung (20) gehört, die durch den Schutzflansch getragen wird und in Berührung mit dem anderen Ring steht.

15. Verfahren zur Herstellung eines mit einem Schutzflansch (7) ausgestatteten Rings (2) eines Lagers (1), **dadurch gekennzeichnet, dass** zu dem Verfahren die Schritte gehören:
- Stanzen eines ebenen Blechteils,
- Formen einer Ringnut auf der ebenen Fläche des Blechteils durch Prägen,
- Biegen bzw. Tiefziehen des Blechteils, um dem Ring seine endgültige Form zu verleihen und die Ringnut in die gewünschte axialen Position bezüglich der radialen Anlagefläche des Schutzflansches zu bringen,
- Einsetzen des ringförmigen Flansches (7) durch Einrasten, der, im Schnitt gesehen, ein erster zylindrischer Abschnitt (7a), der als Schutzabschnitt dient, ein Boden (7b), der in Bezug auf eine radiale Fläche des Lagers geneigt ist, und ein zweiter Abschnitt aufweist, der in Bezug auf eine radiale Ebene des Lagers geneigt ist, indem der ringförmige Flansch (7) mittels eines Einbauwerkzeugs eingedrückt wird, das auf dem Boden (7b) angreift und den zweiten Abschnitts auf der rotationssymmetrischen Fläche (2b) des Rings (2) entlanggleiten lässt bis der Boden (7b) mit einer radialen Anlagefläche (2a) des Rings (2) in Berührung kommt und schließlich auch der zweite Abschnitt in der Nut (9) des Ringes (2) positioniert ist, und zwar infolge der Elastizität, indem der zweite Abschnitt in eine Vielzahl von Zungen (8) aufgeschnitten ist, wodurch der einmal positionierte Flansch dazu neigt, seine ursprüngliche Form wieder einzunehmen und sich zwischen der Anlagefläche (2) des stillstehenden Rings (2) und dem Grund der Nut (9) in Axialrichtung durchzuwölben.

## Claims

1. Protective annular flange (7) intended to be mounted on one of the race rings (2, 3) of a rolling bearing (1) of the type comprising at least one row of rolling bodies (4) held between the two bearing race rings (2, 3), the annular flange (7) comprising a protective part extending near to the other race ring of the bearing (1) and a part for fixing to the race ring of the bearing (1) supporting the annular flange (7), **characterized in that** the fixing part comprises an axisymmetric bearing surface (7c), the generator of which makes an angle A with respect to a radial plane before the flange (7) is mounted, and a catching surface (7d) of frustoconical shape connected to the bearing surface (7c), cut into a number of radially elastic tabs (8) forming a crown at an angle B with respect to a radial plane.

2. Protective flange (7) according to Claim 1, **characterized in that** the value of the angle A is between 5° and 20° and that of the angle B is between 40° and 80°.

3. Protective flange (7) according to Claim 1 or 2, **characterized in that** the tabs (8) extend radially outwards.

4. Protective flange (17) according to Claim 1 or 2, **characterized in that** the tabs (18) extend radially inwards.

5. Rolling bearing (1) comprising at least one row of rolling bodies (4) held between two bearing race rings and a protective flange (7) mounted on one of the race rings (2) and extending near to the other race ring (3) of the bearing (1), **characterized in that** the race ring (2) supporting the flange (7) comprises a roughly radial bearing surface (2a) for the flange and, axially near to it, an axisymmetric surface (2b) provided with an annular groove (9) intended to hold the flange (7) by snap-fastening and provided with a retaining surface (9a) intended to collaborate with the end of the tabs (8) of the flange (7).

6. Rolling bearing according to Claim 5, **characterized in that** the diameter measured across the free end of the tabs (8) of the flange (7) before the flange is mounted is roughly equal to the diameter at the bottom of the groove (9).

7. Rolling bearing according to Claim 6, **characterized in that** the flange (7) is held elastically between the radial bearing surface (2a) of the race ring (2) and the retaining surface (9a) of the groove (9), the tabs (8) being engaged in the said groove (9).

8. Rolling bearing according to any one of Claims 5 to 7, **characterized in that** the axisymmetric surface (2b) is frustoconical.

9. Rolling bearing according to any one of Claims 5 to 7, **characterized in that** the axisymmetric surface is cylindrical.

10. Rolling bearing according to any one of Claims 5 to 9, **characterized in that** the flange (17) is supported by the non-rotating race ring of the bearing.

11. Rolling bearing according to any one of Claims 5 to 9, **characterized in that** the flange (7) is supported by the rotating race ring of the bearing.

12. Rolling bearing according to any one of Claims 5 to 11, **characterized in that** the flange (17) is supported by the outer race ring of the bearing.

13. Rolling bearing according to any one of Claims 5 to 11, **characterized in that** the flange (7) is supported by the inner race ring of the bearing.

14. Rolling bearing according to any one of Claims 5 to 13, **characterized in that** it comprises a seal (20) supported by the flange and coming into contact with the other race ring.

15. Method of manufacturing a race ring (2) of a rolling bearing (1) equipped with a protective flange (7), **characterized by** the following steps:
- cutting out a flat sheet metal blank,
- forming a circular groove in the flat surface of the blank by stamping;
- pressing the blank to give the race ring its definitive shape and bring the groove into its desired axial position with respect to the radial bearing surface for the flange,
- fitting the annular flange (7) which, in cross section, comprises a first cylindrical branch (7a) acting as a protective part, a bottom (7b) which is inclined with respect to a radial plane of the bearing and a second branch which is inclined with respect to a radial plane of the bearing by snap-fastening by pressing it using a fitting tool acting on the bottom (7b) and causing the second branch to slide along the axisymmetric surface (2b) of the race ring (2) followed by contact between the bottom (7b) and a radial bearing surface (2a) of the race ring (2) and finally the fitting of the second branch into the groove (9) of the race ring (2) by elasticity, the second branch being cut into a number of tabs (8), the flange, once fitted, tending to revert to its initial shape and bracing itself axially between the bearing surface (2a) of the non-rotating race ring (2) and the bottom of the groove (9).
